# EUROPEAN PATENT SPECIFICATION

(11) **EP 2 860 093 B1**
(45) Date of publication and mention of the grant of the patent: **06.12.2017**
(21) Application number: 14188111.0
(22) Date of filing: 08.10.2014
(51) Int. Cl.: B62K 11/04, B62J 35/00, B62J 37/00

(54) **Saddle riding type vehicle**
Sattelfahrzeug
Véhicule de type à selle

(30) Priority: 09.10.2013 JP 2013212055
(43) Date of publication of application: 15.04.2015
(73) Proprietor: Yamaha Hatsudoki Kabushiki Kaisha, Iwata-shi, Shizuoka 438-8501 (JP)
(72) Inventor: Suzuki, Takashi, Iwata-shi, Shizuoka 438-0026 (JP)
(74) Representative: Grünecker Patent- und Rechtsanwälte PartG mbB

(56) References cited:
- JP-A- H0 234 492
- JP-A- H04 365 688
- JP-A- 2004 352 144
- JP-A- 2009 090 758
- JP-U- H0 313 294
- US-A1- 2004 238 254
- US-A1- 2012 205 179

## Description

This invention relates to a saddle riding type vehicle according to the preamble of independent claim 1. Such a saddle riding type vehicle can be taken from the prior art document JP H03 13294 U.

Conventionally, a pipe frame and a casting frame are known as vehicle body frames of saddle riding type vehicles. The pipe frame is inferior to the casting frame in rigidity, but has advantages of being inexpensive and easily workable. Among body frames of the pipe frame type, there is a frame construction having two main frames extending from a head tube. Generally, this frame construction includes a cross member which connects the two main frames, in order to improve rigidity in a transverse direction. A fuel tank is disposed on upper parts of the two main frames (see JP 2010-23730 A).

However, where the cross member is disposed between the upper parts of the two main frames, the space under the fuel tank is divided by the cross member to become narrow, which poses a drawback that components cannot be arranged in that space. To deal with this drawback, a frame construction without a cross member has been considered (see JP 2012-71800 A).

The vehicle body frame described in JP 2010-23730 A includes bridges 12 and 13 as cross members between upper parts of a pair of right and left main frames formed of pipe having a circular section, thereby to improve rigidity in the transverse direction.

The vehicle body frame described in JP 2012-71800 A includes pairs of right and left upper main frames and lower main frames, respectively. Rigidity is improved by joining the upper main frames and lower main frames.

With the technique JP 2010-23730 A, however, since the cross members are arranged between the upper parts of the main frames on which a fuel tank is placed, the space under the fuel tank cannot be used effectively. With the technique of JP 2012-71800 A, although the body frame is constructed without a cross member, the frame construction is complicated and there is a problem of a likely weight increase due to the upper and lower main frames.

Further, with the constructions of JP 2010-23730 A and JP 2012-71800 A, the space under the fuel tank and between the right and left main frames is close to the engine suspended from the main frames, and it is difficult to arrange components under the fuel tank. As shown in Fig. 10 of JP 2012-71800 A, the lower surface of the fuel tank is convexed upward to secure space between the fuel tank lower surface and the engine for arranging components under the fuel tank. However, with the lower surface of the fuel tank convexed upward, there arises a problem of a decreased volume of the fuel tank.

This invention has been made having regard to the state of the art noted above, and its object is to provide a saddle riding type vehicle comprising a vehicle body frame which enables effective use of a space under a fuel tank. According to the present invention said object is solved by a saddle riding type vehicle having the features of independent claim 1. Preferred embodiments are laid down in the dependent claims.

Accordingly, it is provided a saddle riding type vehicle comprising vehicle body frame comprising a head tube; a pair of pipe type right and left main frames connected to the head tube; a down frame connected to the head tube and disposed below the main frames; and an engine-suspending bracket extending downward from the main frames; wherein the main frames have connections with seat frames; and the engine-suspending bracket is disposed forward of the connections.

The vehicle body frame can be constructed with no cross member provided between upper parts of the main frames. With the engine-suspending bracket extending downward from the main frames, the engine can be suspended in a position separated downward from the main frames. The engine-suspending bracket is disposed forward of the connections with the seat frames. Consequently, space can be secured between the fuel tank and the suspended engine without reducing the volume of the fuel tank, and components and the like can be arranged in this space. The fuel tank placed on the upper parts of the main frames can project also between the main frames and below the main frames, thereby to increase the volume of the fuel tank. Further, the engine-suspending bracket can improve the rigidity in the transverse direction.

It is preferred that the body frame further comprises subframes connecting the down frame and the main frames. With the subframes provided for connecting the down frame and the main frames, frame rigidity in the transverse direction can be further improved.

The engine-suspending bracket includes a pair of right and left stays extending downward from the main frames, respectively, collars connected to the pair of right and left stays, and a bolt which is inserted in the collars for connection between the stays; the collars holding therebetween and fixing an engine suspended from the bolt. With this construction, the suspension members of the engine fit within a width of the main frames, and the engine-suspending structure can thus save space.

The saddle riding type vehicle comprises the engine suspended from the engine-suspending bracket; and a fuel tank mounted on the main frames; wherein the engine has a cylinder inclined forward, and is suspended in a position upward and rearward of the cylinder.

Since the engine assumes a forward tilting position, and is suspended in the position upward and rearward of the cylinder from the engine-suspending bracket extending downward from the main frames, even the highest position of the engine can secure space with the fuel tank.

It is preferred that the position upward and rearward of the cylinder is a rear part of a cylinder head. Since the rear part of the cylinder head is suspended by the engine-suspending bracket, it is unnecessary to give rigidity to a head cover of the engine. Consequently, the head cover made of resin is employable, thereby to realize weight saving and low cost of the head cover.

The vehicle further comprises a fuel supply system, preferably disposed below the fuel tank, and including at least one of a fuel filter, a fuel pump and a fuel hose. The fuel supply system can be arranged compactly in a space-saving way in the space between the fuel tank and the engine.

The fuel supply system including at least one of a fuel filter, a fuel pump and a fuel hose is disposed in a space surrounded by the pair of right and left stays, the collars and the fuel tank. The fuel supply system exposed outside when cowls are removed can be protected from objects flying from the outside, by the stays, the collars and the engine suspended from these, the fuel tank and so on.

It is preferred that the vehicle further comprises a fuel injection device disposed rearward of the cylinder; wherein the fuel hose extends through an area between the engine and the fuel tank to be connected to the fuel injection device. With the fuel hose disposed in the space between the fuel tank and the engine, the fuel hose can be arranged without interference with other components.

It is preferred that the fuel tank includes a fuel-discharging nozzle, and a bracket for connection to the main frames; the bracket has sections extending downward for connection to the main frames; and the sections project further downward than the nozzle.

Since the sections of the bracket project further downward than the nozzle, when the fuel tank is laid on the ground at a time of maintenance, for example, the sections and the rear end of the fuel tank contact the ground, thereby to avoid contact of the nozzle with the ground. Consequently, tip end of the nozzle is prevented from being soiled.

A saddle riding type vehicle comprising a vehicle body frame which enables effective use of a space under a fuel tank can be provided.

### BRIEF DESCRIPTION OF THE DRAWINGS

For the purpose of illustrating the invention, there are shown in the drawings several forms which are presently preferred, it being understood.

Figure 1 is a left side view of a two-wheeled motor vehicle according to an embodiment;
Figure 2 is a left side view of a body frame;
Figure 3 is a top view of the body frame;
Figure 4 is a perspective view of the body frame seen from an obliquely rear rightward direction;
Figure 5 is a left side view of an engine and adjacent components mounted on the body frame;
Figure 6 is an enlarged view of a portion of Figure 5;
Figure 7 (a) is a side view of a fuel tank, Figure 7 (b) is a fragmentary bottom view of the fuel tank, and Figure 7 (c) is a bottom view of a fuel pump;
Figure 8 is a fragmentary top view showing an arrangement of cables mounted on the two-wheeled motor vehicle;
Figure 9 is a perspective view, seen from an obliquely upper rightward direction, of the two-wheeled motor vehicle with the fuel tank removed;
Figure 10 is a section taken on line X-X of Figure 6; and
Figure 11 is a side view of the fuel tank.

### DESCRIPTION OF THE PREFERRED EMBODIMENTS

A preferred embodiment will be described in detail hereinafter with reference to the drawings.

A two-wheeled motor vehicle will be described here as an example of saddle riding type vehicle according to the embodiment. In the following description, front, rear, right and left are based on the traveling direction of the two-wheeled motor vehicle.

### 1. Outline construction of two-wheeled motor vehicle

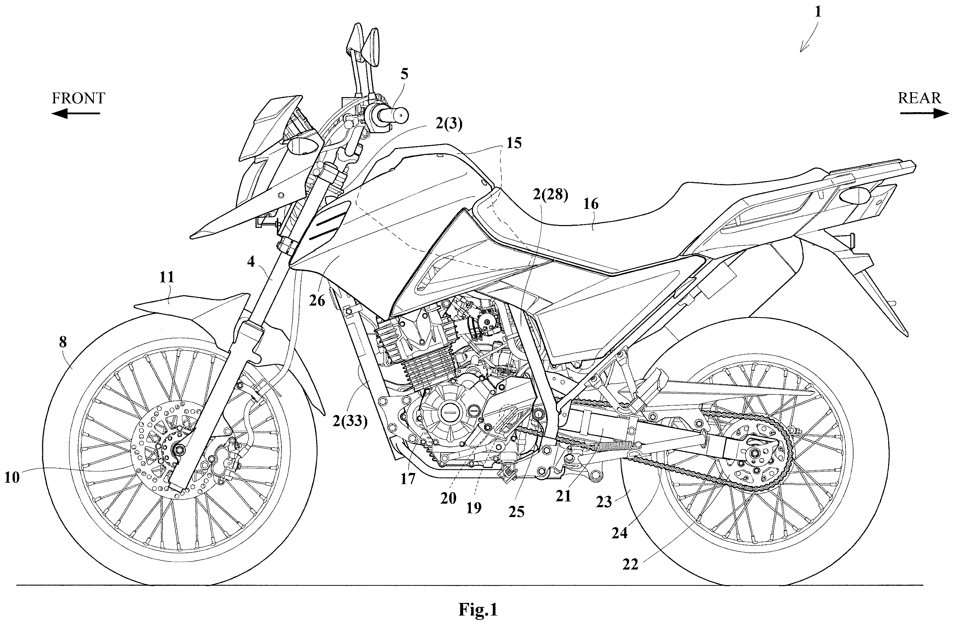

Fig. 1 is a left side view of a two-wheeled motor vehicle 1 having a body frame according to this embodiment. The two-wheeled motor vehicle 1 has a body frame 2. A head tube 3 is disposed in an upper front portion of the body frame 2. The head tube 3 has a pair of extendible and contractible front forks 4 rotatably attached thereto. A handlebar 5 is connected to upper portions of the front forks 4. A brake lever (not shown) is disposed on a rightward portion of the handlebar 5. The front forks 4 are swingable by turning operation of the handlebar 5.

A front wheel 8 is rotatably attached to lower ends of the front forks 4. Vibration of the front wheel 8 is absorbed by extension and contraction of the front forks 4. A brake 10 is attached to the lower ends of the front forks 4. Rotation of the front wheel 8 is braked by operation of the brake lever. A front wheel cover 11 is fixed to the front forks 4 above the front wheel 8.

A fuel tank 15 and a seat 16 are held as arranged fore and aft on an upper portion of the body frame 2. An engine 17 is held by the body frame 2 below the fuel tank 15. Power generated by the engine 17 is outputted by a drive shaft 19. A drive sprocket 20 is connected to the drive shaft 19.

A swing arm 21 is swingably supported by a lower rear portion of the body frame 2. A driven sprocket 22 and a rear wheel 23 are rotatably supported at a rear end of the swing arm 21. A chain 24 extends between and is wound around the drive sprocket 20 and driven sprocket 22. The power generated by the engine 17 is transmitted to the rear wheel 23 through the drive shaft 19, drive sprocket 20, chain 24 and driven sprocket 22. Cowls 26 are attached rightward and leftward of the upper portion of the body frame 2 and rightward and leftward of the fuel tank 15.

### 2. Construction of body frame

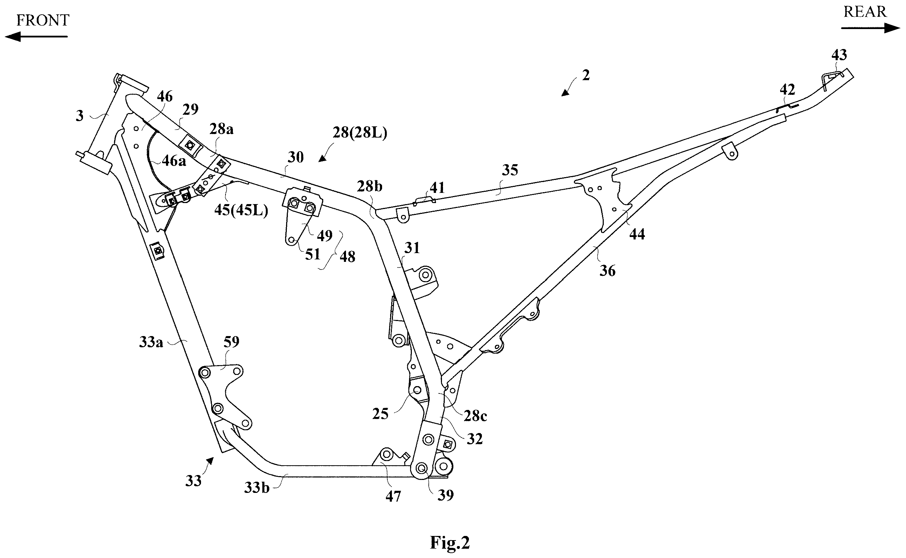

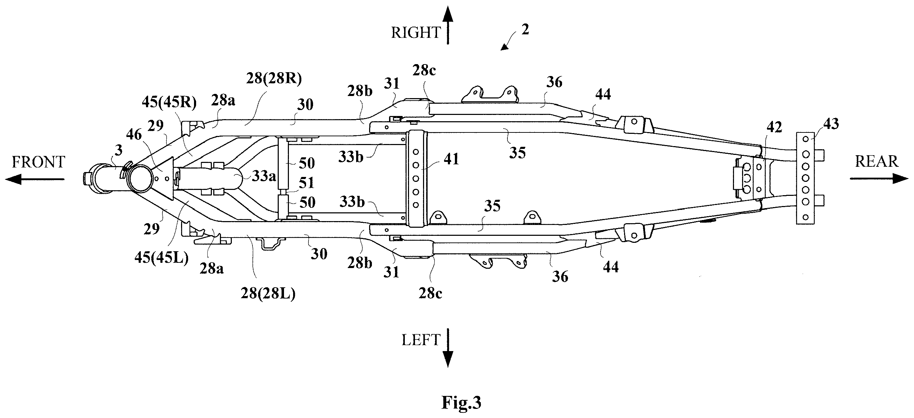

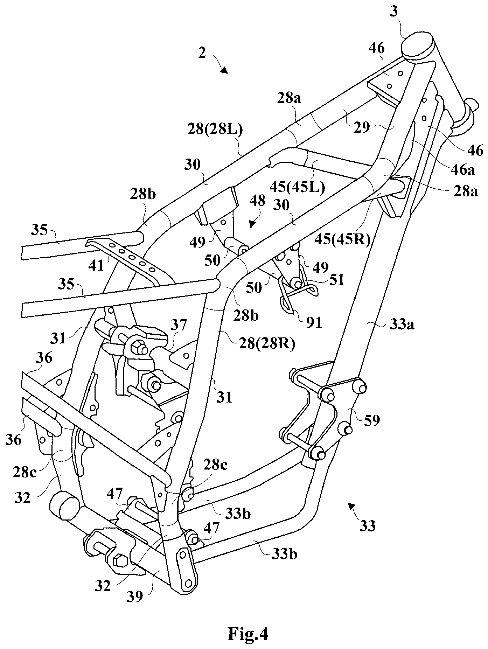

Next, the construction of the body frame provided for the two-wheeled motor vehicle 1 will be described with reference to Figs. 2 to 4. Fig. 2 is a left side view of the body frame. Fig. 3 is a top view of the body frame. Fig. 4 is a perspective view of the body frame seen from an obliquely rear rightward direction.

The body frame 2 includes the head tube 3, main frames 28, a down frame 33 and seat frames 35. The main frames 28, down frame 33 and seat frames 35 are formed of pipe having a circular section, which is easy to bend and allows the body frame 2 to be manufactured at low cost.

The main frames 28 are formed of a pair of right and left pipes 28L and 28R, and are connected to an upper part of the head tube 3 by welding. The main frames 28 extend from the head tube 3 in a way to spread transversely outward of the vehicle body. Soon the main frames 28 extend parallel and rearward from first curved portions 28a, and then from second curved portions 28b, bend and extend downward and transversely outward of the vehicle body. The main frames 28 are connected at the second curved portions 28b to the seat frames 35. The main frames 28 extending downward from the second curved portions 28b bend at third curved portions 28c and extend forward and downward therefrom. A pivot shaft 25 is attached to front parts of the third curved portions 28c to act as swing axis of the swing arm 21.

The main frames 28 include first frame enlarging portions 29 which extend from the head tube 3 to the first curved portions 28a, first frame parallel portions 30 which extend from the first curved portions 28a to the second curved portions 28b, second frame enlarging portions 31 which extend from the second curved portions 28b to the third curved portions 28c, and second frame parallel portions 32 which extend from the third curved portions 28c to lower ends. In the second frame enlarging portions 31, an upper cross member 37 is connected between the pipes 28L and 28R (see Fig. 4). At the lower ends of the main frames 28 below the third curved portions 28c, a lower cross member 39 is connected between the pipes 28L and 28R. Thus, the cross members between the pipes 28L and 28R are arranged below the second curved portions 28b of the main frames 28. Therefore, in the main frames 28, no cross member is provided for the first frame enlarging portions 29 or the first frame parallel portions 30. In other words, no cross member is provided on the main frames 28 forward of the connections with the seat frames 35.

The down frame 33 includes one down tube 33a connected to a lower part of the head tube 3 by welding, and down subtubes 33b connected to a lower part of the down tube 33a by welding. The down frame 33 is disposed below the main frames 28. The down subtubes 33b, which are formed of a pair of right and left pipes extending rearward, are connected to the lower end of the down tube 33a by welding. The down subtubes 33b extend from the down tube 33a in a way to spread transversely outward of the vehicle body, and soon extend rearward and parallel to each other. Rear ends of the down subtubes 33b are connected to the lower cross member 39. Thus, the body frame 2 is a semidouble cradle type frame which has the two pipes 28L and 28R of the main frames 28 and one down tube 33a extending from the head tube 3.

The seat frames 35 are formed of a pair of right and left pipes extending rearward from the second curved portions 28b of the main frames 28. Between these pipes, a first rear cross member 41, a second rear cross member 42 and a third rear cross member 43 are connected. Rear subframes 36 are connected to upper parts of the third curved portions 28c of the main frames 28. The rear subframes 36 extend upward and rearward from the main frames 28 and are connected to rear parts of the seat frames 35. Reinforcing plates 44 are connected between the seat frames 35 and rear subframes 36.

A gadget 46 is connected by welding to a rear surface of the head tube 3, inner surfaces at the front ends of the main frames 28 and an inner surface at the front end of the down tube 33a. The gadget 46 reinforces the connections between the head tube 3, main frames 28 and down frame 33. The gadget 46 has, in a rear part thereof, a recess 46a curved forward.

Subframes 45 are connected between the main frames 28 and down frame 33 through the gadget 46. The subframes 45 have a pair of right and left pipes 45L and 45R. The subframes 45 extend forward, downward and transversely inward of the vehicle body from front portions of the first frame parallel portions 30 of the main frames 28, and are connected to the gadget 46 by welding. The subframes 45 may be connected directly to the down tube 33a instead of being welded to the gadget 46. The recess 46a of the gadget 46 is formed between a connection between the gadget 46 and main frames 28 and a connection between the gadget 46 and subframes 45.

The subframes 45 are connected from the main frames 28 to the one down tube 33a extending downward from the head tube 3, thereby to be able to improve the rigidity in the transverse direction of the body frame 2. The subframes 45 are turned more inward transversely of the vehicle body when the right and left subframes are connected to one down tube extending downward from the head tube, than when, in a frame structure having two down tubes extending downward from the head tube, the subframes are connected to the respective down tubes. Thus, the body frame 2 can further improve rigidity against loads acting transversely of the vehicle body.

The main frames 28 have a bracket 48 for suspending the engine 17. The bracket 48 extends forward and downward from middle parts of the frame parallel portions 30 of the main frames 28. The bracket 48 has a pair of right and left stays 49 extending downward from the main frames 28, respectively, collars 50 connected to the pair of right and left stays 49, and a bolt 51 inserted in the collars 50 and connecting the stays 49.

The engine 17 is fixed to the down tube 33a by a bracket 59 provided on a lower part of the down tube 33a, and is fixed to the down subtubes 33b by brackets 47 provided on rear parts of the down subtubes 33b.

### 3. Construction of engine and fuel supply line

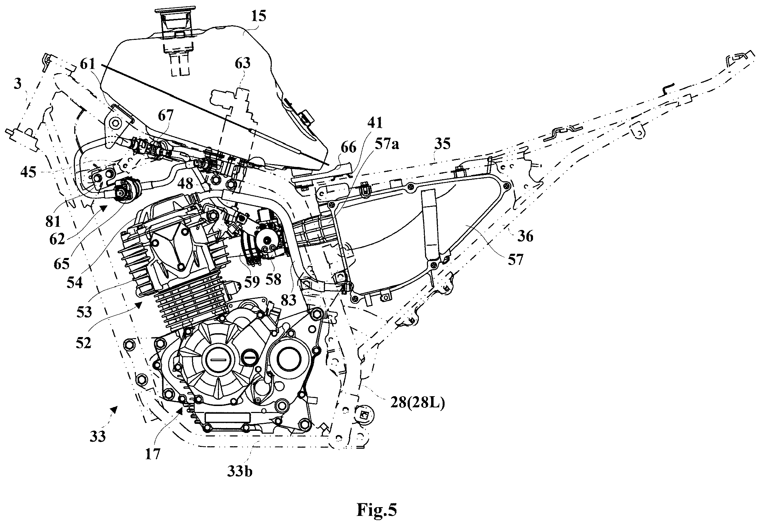

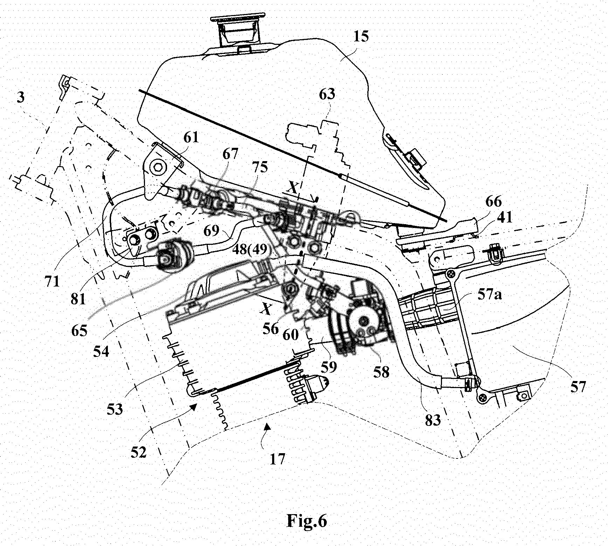

Next, constructions of the engine and a fuel supply line provided for the two-wheeled motor vehicle 1 will be described with reference to Figs. 5 and 6. Fig. 5 is a left side view of the engine and adjacent components mounted on the body frame. Fig. 6 is an enlarged view of a portion of Fig. 5. In Figs. 5 and 6, the body frame 2 is shown in two-dot chain lines.

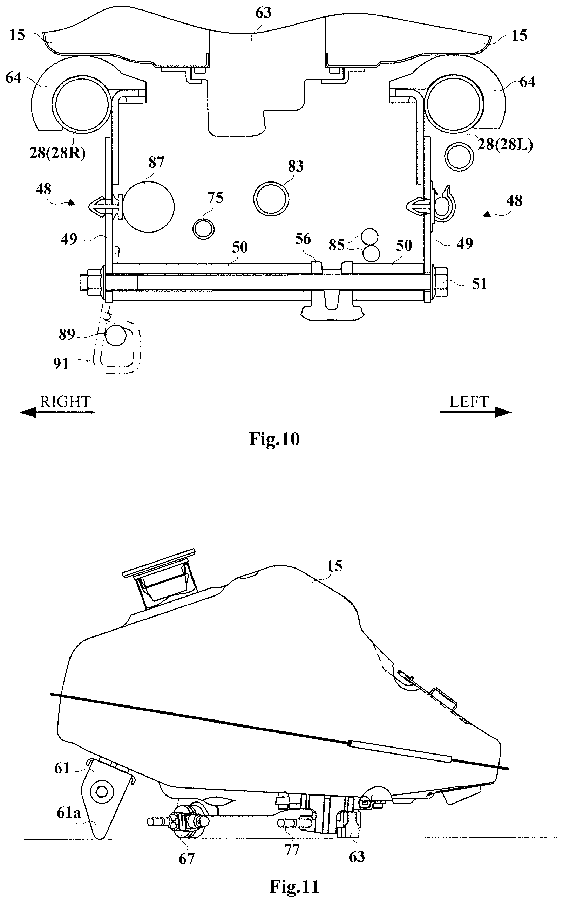

The engine 17 has a cylinder 52 extending upward, and is fixed to the body frame 2 with the cylinder 52 inclined forward. The engine 17 is suspended from the main frames 28 through the bracket 48 upward and rearward of the cylinder 52, and is supported in a forward tilting position by the main frames 28 and down frame 33. The cylinder 52 has a cylinder head 53 and a head cover 54. The engine 17 is suspended with the bolt 51 placed to extend through a boss 56 provided in a rear part of the cylinder head 53, the bolt 51 being tightened to the stays 49, whereby the collars 50 hold the boss 56 in between (see Fig. 10). Consequently, the suspension members of the engine 17 fit within the width of the main frames 28, and the suspension members can thus save space.

Reference is made to Figs. 5 and 6 again. Since the engine 17 assumes the forward tilting position, and is suspended in a position upward and rearward of the cylinder 52 from the engine-suspending bracket 48 extending downward from the main frames 28, even the highest position of the engine 17 can secure space with the fuel tank 15. Since the rear part of the cylinder head 53 is suspended by the bracket 48, it is unnecessary to give rigidity to the head cover 54 of the engine 17. Consequently, the head cover made of resin is employable, thereby to realize weight saving and low cost of the head cover 54. A breather tube 83 disposed above the collars 50 is connected to the cylinder head 53.

An air cleaner box 57 is disposed in area surrounded by the main frames 28, seat frames 35 and rear subframes 36. A joint 57a extends forward from the air cleaner box 57, and is connected through a throttle body 58 to an intake manifold 59. A fuel injection device 60 is provided for the intake manifold 59 to have a fuel injection port directed toward the center of the intake manifold 59. The fuel injection device 60 is disposed rearward of the cylinder 52.

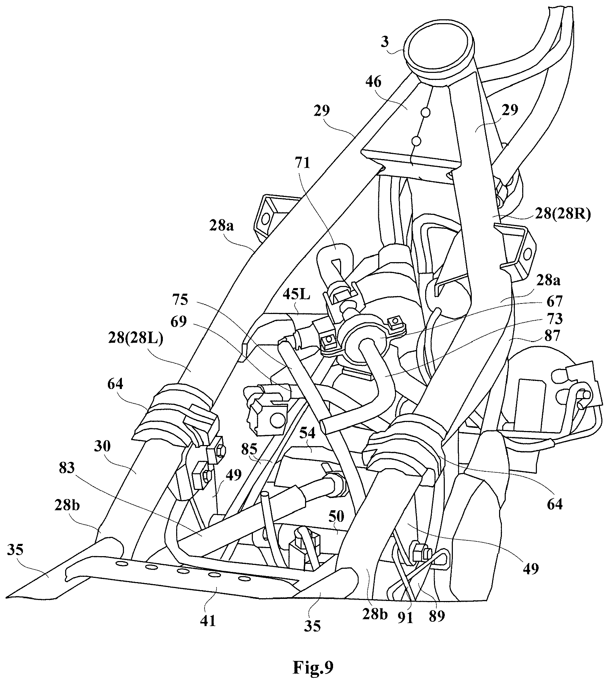

The fuel tank 15 is attached to the main frames 28 through a bracket 61 fixed to a bottom front part thereof. The fuel tank 15 has bottom rear parts thereof placed on shock-absorbing members 64 fixed on the main frames 28 (see Fig. 9), and a bottom rear end attached to the first rear cross member 41 through a stay 66. Rubber may be cited as one example of the shock-absorbing members 64. When removing the fuel tank 15 from the main frames 28, the bracket 61 is removed with the fuel tank 15.

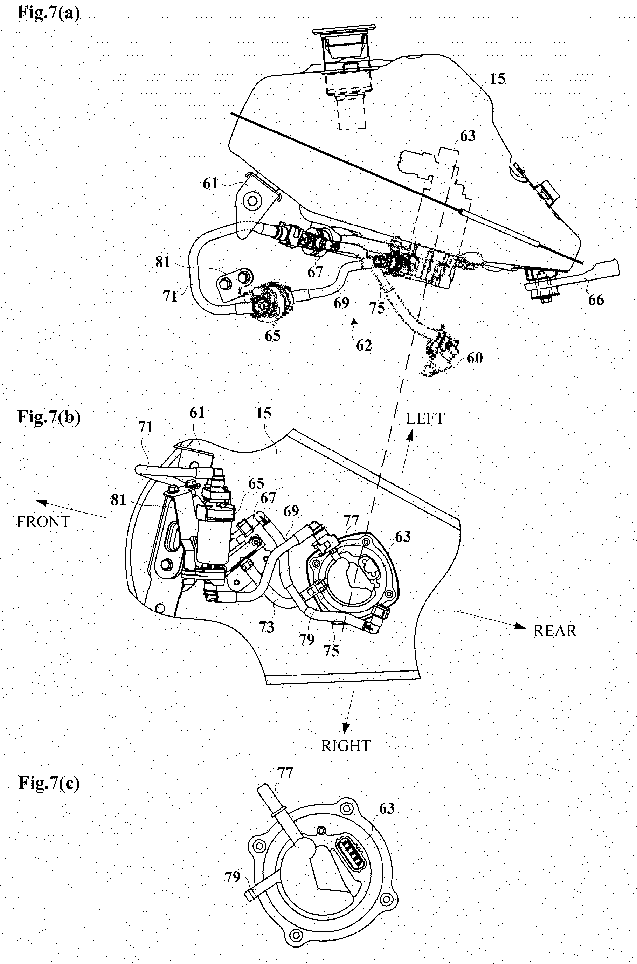

Next, reference is made to Figs. 6 and 7. Fig. 7 (a) is a side view of the fuel tank and a fuel supply system. Fig. 7 (b) is a bottom view of a portion of the fuel tank and the fuel supply system. Fig. 7 (c) is a bottom view of a fuel pump. In Fig. 7 (b), the forward end of a fuel hose 75 is in a state removed from the fuel injection device 60. A fuel supply system 62 includes a fuel pump 63 for discharging under pressure the fuel stored in the fuel tank 15, a fuel filter 65 for filtering the fuel discharged from the fuel pump 63, a pressure regulator 67 for regulating the pressure of the fuel having passed through the fuel filter 65, a fuel hose 69 connecting the fuel pump 63 and fuel filter 65, a fuel hose 71 connecting the fuel filter 65 and pressure regulator 67, a fuel hose 73 connecting the pressure regulator 67 and fuel pump 63, and a fuel hose 75 connecting the pressure regulator 67 and fuel injection device 60.

The fuel pump 63 is inserted into the fuel tank 15 from the bottom thereof. A lower part of the fuel pump 63 is exposed outside the fuel tank 15. The fuel pump 63 has a discharge nozzle 77 and an intake nozzle 79. The discharge nozzle 77 and intake nozzle 79 are arranged outside the fuel tank 15. The fuel pressurized by the fuel pump 63 passes through the discharge nozzle 77, and is discharged into the fuel hose 69.

The fuel filter 65 is fixed to the subframes 45 by a bracket 81. The fuel discharged from the fuel pump 63 passes through the fuel hose 69 to be supplied to the fuel filter 65 disposed forward of the fuel pump 63. The fuel filtered by the fuel filter 65 passes through the fuel hose 71 to be fed to the pressure regulator 67 disposed between the fuel pump 63 and fuel filter 65.

The pressure regulator 67 is a device for regulating the pressure of the fuel supplied to the fuel injection device 60. When the pressure of the fuel having passed through the fuel filter 65 is higher than a predetermined pressure, the pressure can be adjusted by returning the fuel from the pressure regulator 67 to the fuel pump 63 through the fuel hose 73 and intake nozzle 79. Consequently, the fuel is fed under appropriate pressure from the pressure regulator 67 to the fuel injection device 60 through the fuel hose 75.

Thus, the fuel discharged from the fuel pump 63 is fed to the pressure regulator 67 through the discharge nozzle 77, fuel hose 69, fuel filter 65 and fuel hose 71. The fuel fed to the pressure regulator 67 is fed to the fuel injection device 60 through the fuel hose 75, and part of the fuel is returned to the fuel pump 63 through the fuel hose 73 and intake nozzle 79.

The exposed part of the fuel pump 63 is disposed in a position overlapping the main frames 28 as seen from a side, and further below this the bracket 48 for suspending the engine 17 is disposed. Consequently, sufficient space is secured between the cylinder head 53 and head cover 54 inclined forward, and the fuel pump 63. The space under the fuel tank 15 can be used effectively by feeding the fuel discharged from fuel pump 63 forward to pass through the fuel filter 65 and pressure regulator 67, and again to pass through an area below the fuel pump 63.

Since the fuel supply system 62 is arranged below the fuel tank 15, the fuel supply system 62 can be arranged compactly in a space-saving way in the space between the fuel tank 15 and engine 17. The fuel pump 63 and fuel hose 75 are arranged in the space surrounded by the pair of right and left stays 49, collars 50 and fuel tank 15. Thus, the fuel pump 63 and fuel hose 75 exposed outside when the cowls 26 are removed can be protected from objects flying from the outside, by the stays 49, collars 50 and the engine 17 suspended from these, the fuel tank 15 and so on.

### 4. Arrangement of cables

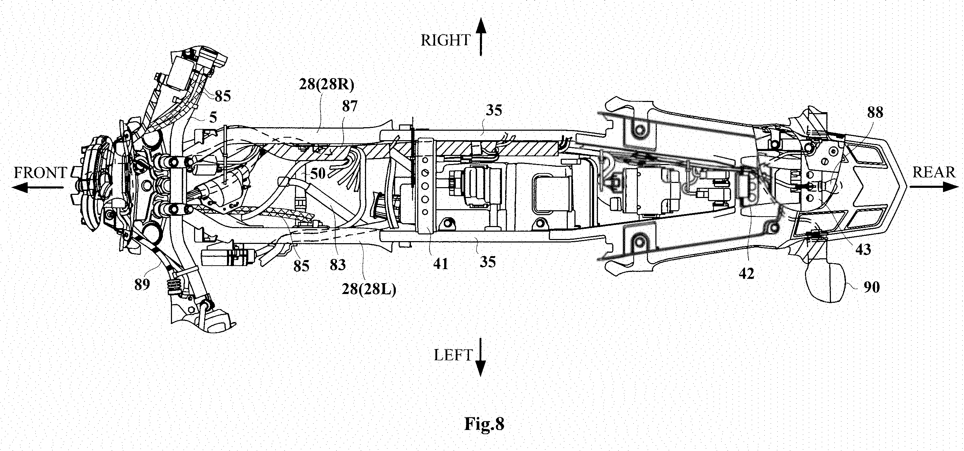

Next, an arrangement of cables will be described with reference to Figs. 8 to 10. Fig. 8 is a fragmentary top view showing an arrangement of cables mounted on the two-wheeled motor vehicle. Fig. 9 is a perspective view, seen from an obliquely upper rightward direction, of the two-wheeled motor vehicle with the fuel tank removed. Fig. 10 is a section taken on line X-X of Fig. 6 and seen from front.

In the space between the fuel tank 15 and engine 17, various cables can be arranged besides the fuel supply system 62. These cables include throttle wires 85 and a wire harness 87.

The throttle wires 85 are wires extending from a throttle disposed rightward of the handlebar 5, which pass through an area forward of the head tube 3, and extend from an area leftward of the head tube 3 through a space between the main frames 2 and subframes 45 into the body frame 2. The throttle wires 85 extend from between the main frames 2 and subframes 45 over the collars 50 toward the intake manifold 59.

The wire harness 87 bundles a plurality of electric wires in an area forward of the head tube 3, which include electric wires for a taillight 88 and rear blinkers 90. The wire harness 87, as seen from above, extends rearward along the right pipe 28R of the main frames 28, and extends further rearward along the right seat frame 35.

These cables can be arranged linearly in the space between the fuel tank 15 and engine 17. Consequently, these cables are arranged easily. These cables can be passed through the space surrounded by the pair of right and left stays 49, collars 50 and fuel tank 15. These cables, since they are covered by the fuel tank 15, engine 17 and main frames 28, are protected also when the two-wheeled motor vehicle 1 collides with something. The right stay 49 has a bracket 91 for supporting a clutch wire 89.

Next, reference is made to Fig. 11. Fig. 11 is a side view of the fuel tank at a time when the fuel tank is laid on the ground. The bracket 61 is formed of a metal plate having opposite ends thereof bent downward. Sections 61a are the parts bent downward. When the fuel tank 15 is removed from the main frames 2 and laid on the ground, since the bracket 61 has the sections 61a extending downward, the front part of the fuel tank 15 is raised, and the lower ends of the sections 61a and the lower end of the fuel pump 63 contact the ground.

Thus, even when the fuel tank 15 is laid on the ground at a time of maintenance, for example, since the sections 61a of the bracket 61 project further downward than the discharge nozzle 77 and intake nozzle 79, the lower ends of the sections 61a and fuel pump 63 contact the ground, thereby to avoid contact of the discharge nozzle 77 and intake nozzle 79 with the ground. Consequently, tip ends of the discharge nozzle 77 and intake nozzle 79 are prevented from being soiled. The sections 61a projecting further downward than the discharge nozzle 77 and intake nozzle 79 may be provided at both the right and left ends of the bracket 61, or only one such section may be provided at one of the right and left ends.

According to the body frame 2 in this embodiment, the body frame can be constructed with no cross member provided between the upper parts of the pair of right and left main frames 28. With the engine-suspending bracket 48 extending downward from the main frames 28, the engine 17 can be suspended in a position separated downward from the main frames 28. Consequently, space can be secured between the fuel tank 15 and the suspended engine 17 without reducing the volume of the fuel tank 15, and components and the like can be arranged in this space. The components arranged in this space include, for example, the fuel supply system 62, breather tube 83, throttle wires 85 and wire harness 87.

The fuel tank 15 placed on the upper parts of the main frames 28 can project also between the main frames 28 and below the main frames 28, thereby to increase the volume of the fuel tank 15. Further, the bracket 48 for suspending the engine 17 can improve the rigidity in the transverse direction of the main frames 28.

With the subframes 45 provided for connecting the down frame 33 and the pair of right and left main frames 28, frame rigidity in the transverse direction can be further improved. Since the rear part of the gadget 46 has a recessed shape curved forward, further space can be secured below the main frames 28, rearward of the gadget 46 and above the subframes 45.

The fuel injection device 60 is disposed rearward of the cylinder 52. The fuel hoses 69, 71, 73 and 75 used for supplying the fuel from the fuel pump 63 to the fuel injection device 60 are arranged in the space between the fuel tank 15 and engine 17, and the fuel hose 75 is connected to the fuel injection device 60. With the fuel hoses arranged in the space between the fuel tank 15 and engine 17, interference between these fuel hoses and other components is prevented.

The present teaching is not limited to the foregoing embodiment, but may be modified as follows:
(1) In the foregoing embodiment, the two-wheeled motor vehicle is described as saddle riding type vehicle, but this is not limitative. For example, a change may be made to a three-wheeled vehicle having two front wheels, or a three-wheeled vehicle having two rear wheels. Or a change may be made to a four-wheeled vehicle. In such modified embodiments, the construction of front forks 4 can be selected or varied as appropriate.
(2) In the foregoing embodiment, each frame constituting the body frame 2 is formed of pipe having a circular section. Instead of being limited to this, each frame may be formed of pipe having a rectangular section.
(3) In the foregoing embodiment, the fuel filter 65 is disposed outside the fuel tank 15. Instead, a fuel filter may be provided only inside the fuel tank 15, or two fuel filters may be provided, one inside and the other outside the fuel tank 15.
(4) In the foregoing embodiment, the fuel supply system 62 includes the fuel pump 63, fuel filter 65 and fuel hoses 69, 71, 73 and 75. At least one of these fuel line components may be provided, which is disposed below the fuel tank. A fuel supply system having at least one of these fuel line components may be arranged in the space surrounded by the stays 49, collars 50 and fuel tank 15.

## Claims

1. A saddle riding type vehicle comprising a vehicle body frame comprising:
a head tube (3);
a pair of pipe type right and left main frames (28) connected to the head tube (3);
a down frame (33) connected to the head tube (3) and disposed below the main frames (28);
an engine-suspending bracket (48) extending downward from the main frames (28);
an engine (17) having a cylinder (52) inclined forward and suspended from the engine-suspending bracket (48); wherein the engine (17) is suspended in a position upward and rearward of the cylinder (52); a fuel supply system including at least one of a fuel filter (65), a fuel pump (63) and a fuel hose (69,71,73,75); and
a fuel tank (15) mounted on the main frames (28);
wherein the main frames (28) have connections (28b) with seat frames (35); and
the engine-suspending bracket (48) is disposed forward of the connections (28b),
the engine-suspending bracket (48) includes a pair of right and left stays (49) extending downward from the main frames (28), respectively, and a bolt (51), **characterized in that** the engine-suspending bracket (48) further including collars (50) connected to the pair of right and left stays (49), the bolt (51) is inserted in the collars (50) for connection between the stays (49);
the collars (50) holding therebetween and fixing the engine (17) suspended from the bolt (51), wherein the fuel supply system is disposed in a space surrounded by the pair of right and left stays (49), the collars (50) and the fuel tank (15).

2. A saddle riding type vehicle according to claim 1, **characterized by** subframes (45) connecting the down frame (33) and the main frames (28).

3. A saddle riding type vehicle according to claim 1 or 2, **characterized in that** the position upward and rearward of the cylinder (52) is a rear part of a cylinder head (53).

4. A saddle riding type vehicle according to at least one of the claims 1 to 3, **characterized in that** the fuel supply system is disposed below the fuel tank (15).

5. A saddle riding type vehicle according to at least one of the claims 1 to 4, **characterized by**
a fuel injection device (60) disposed rearward of the cylinder (52);
wherein the fuel hose (69,71,73,75) extends through an area between the engine (17) and the fuel tank (15) to be connected to the fuel injection device (60).

6. A saddle riding type vehicle according to at least one of the claims 1 to 5, **characterized in that** the fuel tank (15) includes a fuel-discharging nozzle (77), and a bracket (61) for connection to the main frames (28);
the bracket (61) has sections (61a) extending downward for connection to the main frames (28); and
the sections (61a) project further downward than the nozzle (77).

## Patentansprüche

1. Ein Sattel-Reit-Typ-Fahrzeug, das umfasst einen Fahrzeug-Körper-Rahmen, der umfasst:
ein Kopf-Rohr (3);
ein Paar von Rohr-Typ rechten und linken Haupt-Rahmen (28), die mit dem Kopf-Rohr (3) verbunden sind;
einen Unter-Zug-Rahmen (33), der mit dem Kopf-Rohr (3) verbunden ist und unterhalb der Haupt-Rahmen (28) positioniert ist;
eine Motor-Aufhängungs-Klammer (48), die sich nach unten von dem Haupt-Rahmen (28) erstreckt;
einen Motor (17), der einen Zylinder (52) hat, der nach vorne geneigt ist, und durch die Motor-Aufhängungs-Klammer (48) aufgehängt ist;
wobei der Motor (17) in einer Position nach oben und hinten von dem Zylinderkopf (52) aufgehängt ist;
ein Kraftstoff-Zuführ-System beinhaltet zumindest einen von einem Kraftstoff-Filter (65), einer Kraftstoff-Pumpe (63) und einem Kraftstoff-Rohr (69, 71, 73, 75), und einen Kraftstoff-Tank (15), montiert an den Haupt-Rahmen (28);
wobei die Haupt-Rahmen (28) Verbindungen (28b) mit Sitz-Rahmen (35) haben; und
die Motor-Aufhängungs-Klammer (48) ist vor den Verbindungen (28b) positioniert, die Motor-Aufhängungs-Klammer (48) beinhaltet ein Paar von rechten und linken Streben (48), die sich jeweils nach unten von dem Haupt-Rahmen (28) erstrecken, und einen Bolzen (51), **dadurch gekennzeichnet, dass** die Motor-Aufhängungs-Klammer (48) weiter beinhaltet Hülsen (50), die mit dem Paar von rechten und linken Streben (49) verbunden sind, der Bolzen (51) ist in die Hülsen (50) zur Verbindung mit den Streben (49) eingesetzt;
die Hülsen (50) halten den Motor (17), aufgehängt durch den Bolzen (51),
dazwischen und fixieren diesen, wobei das Kraftstoff-Zuführ-System in einem Raum positioniert ist, welches durch das Paar von rechten und linken Streben (49), die Hülsen (50) und den Kraftstoff-Tank (15) umgeben ist.

2. Ein Sattel-Reit-Typ-Fahrzeug gemäß Anspruch 1, **gekennzeichnet durch** UnterRahmen (45), welche den Unter-Zug-Rahmen (33) und die Haupt-Rahmen (28) verbinden.

3. Ein Sattel-Reit-Typ-Fahrzeug gemäß Anspruch 1 oder 2, **dadurch gekennzeichnet, dass** die Position oberhalb und hinter dem Zylinder (52) ein hinterer Teil eines Zylinderkopfes (53) ist.

4. Ein Sattel-Reit-Typ-Fahrzeug gemäß zumindest einem der Ansprüche 1 bis 3, **dadurch gekennzeichnet, dass** das Kraftstoff-Zuführ-System unterhalb des Kraftstoff-Tanks (15) positioniert ist.

5. Ein Sattel-Reit-Typ-Fahrzeug gemäß zumindest einem der Ansprüche 1 bis 4, **gekennzeichnet durch**
eine Kraftstoff-Einspritzvorrichtung (60), die hinter dem Zylinder (52) positioniert ist; wobei das Kraftstoff-Rohr (69, 71, 73, 75) sich durch einen Bereich zwischen dem Motor (17) und dem Kraftstoff-Tank (15) erstreckt, um mit der Kraftstoff-Einspritzvorrichtung (60) verbunden zu sein.

6. Ein Sattel-Reit-Typ-Fahrzeug gemäß zumindest einem der Ansprüche 1 bis 5, **dadurch gekennzeichnet, dass** der Kraftstoff-Tank (15) eine Kraftstoff-AbgabeDüse (77) beinhaltet, und eine Klammer (61) zur Verbindung mit den Haupt-Rahmen (28);
die Klammer (61) hat Abschnitte (61a), die sich nach unten erstrecken, zur Verbindung mit den Haupt-Rahmen (28); und
die Abschnitte (61a) stehen weiter nach unten vor als die Düse (77).

## Revendications

1. Véhicule de type à enfourcher à selle comprenant un cadre de véhicule incluant :
un tube de fourche (3),
une paire d'ossatures principales (28) gauche et droite de type à tube raccordées au tube de fourche (3),
une ossature inférieure (33) raccordée au tube de fourche (3) et disposée en dessous des ossatures principales (28),
un berceau de suspension de moteur (48) s'étendant vers le bas à partir des ossatures principales (28),
un moteur thermique (17) possédant un cylindre (52) incliné vers l'avant et suspendu à partir du berceau de suspension de moteur (48),
dans lequel le moteur (17) est suspendu dans une position vers le haut et vers l'arrière du cylindre (52),
un système d'alimentation en carburant incluant au moins l'un d'un filtre à carburant (65), d'une pompe à carburant (63) et d'un tuyau à carburant (69, 71, 73, 75),
un réservoir de carburant (15) monté sur les ossatures principales (28),
dans lequel les ossatures principales (28) possèdent des raccordements (28b) avec des ossatures de siège (35), et
le berceau de suspension de moteur (48) est disposé à l'avant des raccordements (28b),
le berceau de suspension de moteur (48) inclut une paire de supports gauche et droite (49) se déployant respectivement vers le bas à partir des ossatures principales (28) et un boulon (51), **caractérisé en ce que** le berceau de suspension de moteur (48) inclut en outre des colliers (50) raccordés à la paire de supports gauche et droite (49), le boulon (51) étant inséré dans les colliers (50) en vue d'un raccordement entre les supports (49),
les colliers (50) effectuant un maintien entre ceux-ci et fixant le moteur (17) suspendu à partir du boulon (51),
dans lequel le système d'alimentation en carburant est disposé dans un espace entouré par la paire de supports gauche et droite (49), les colliers (50) et le réservoir de carburant (15).

2. Véhicule de type à enfourcher à selle selon la revendication 1, **caractérisé par** des sous châssis (45) reliant l'ossature inférieure (33) et les ossatures principales (28).

3. Véhicule de type à enfourcher à selle selon la revendication 1 ou la revendication 2, **caractérisé en ce que** la position vers le haut et vers l'arrière du cylindre (52) représente une partie arrière de la culasse (53).

4. Véhicule de type à enfourcher à selle selon au moins l'une des revendications 1 à 3, **caractérisé en ce que** le système d'alimentation en carburant est placé en dessous du réservoir de carburant (15).

5. Véhicule de type à enfourcher à selle selon au moins l'une des revendications 1 à 4, **caractérisé par :**
un dispositif d'injection de carburant (60) placé à l'arrière du cylindre (52),
dans lequel le tuyau à carburant (69, 71, 73, 75) s'étend au travers d'une zone comprise entre le moteur (17) et le réservoir de carburant (15) pour être relié au dispositif d'injection de carburant (60).

6. Véhicule de type à enfourcher à selle selon au moins l'une des revendications 1 à 5, **caractérisé en ce que** le réservoir de carburant (15) inclut une buse d'éjection de carburant (77) et une patte de montage (61) en vue d'un raccordement aux ossatures principales (28),
la patte de montage (61) comporte des sections (61a) s'étendant vers le bas en vue d'un raccordement aux ossatures principales (28), et
les sections (61a) dépassent vers le bas au-delà de la buse (117).
